# DEMANDE DE BREVET EUROPEEN

(11) **EP 1 972 513 A1**
(43) Date de publication de la demande: **24.09.2008**
(21) Numéro de dépôt: 07300888.0
(22) Date de dépôt: 21.03.2007
(51) Int. Cl.: B60T 8/88, B60T 13/74

(54) **Système de freinage électromécanique d'un véhicule**

(71) Demandeur: Delphi Technologies, Inc., Troy, MI 48007 (US); RENAULT S.A.S., 92100 Boulogne Billancourt (FR)
(72) Inventeur: Rocher, Jean-Michel, 91620, NOZAY (FR); Degoul, Paul, 75014, PARIS (FR)
(74) Mandataire: Laget, Jean-Loup

(57) **Abrégé**

Système de freinage électromécanique d'un véhicule, comportant quatre modules électroniques de roues (1, 2, 3, 4), aptes à commander respectivement un frein électrique d'une roue dudit véhicule, et un réseau de communication apte à connecter lesdits modules électroniques de roues, caractérisé en ce que ledit réseau de communication comprend une première ligne de communication (30) connectant un desdits modules électroniques de roue droits (1, 4) avec un desdits modules électroniques de roue gauches (2, 3), ledit réseau de communication comportant une deuxième ligne de communication (32) connectant l'autre desdits modules électroniques de roue gauches (2, 3) avec l'autre desdits modules électroniques de roue droits (1, 4), chacune desdites première et deuxième lignes de communication étant connectée avec un coupleur (20) dudit système de freinage apte à isoler électriquement ladite ligne de communication.

## Description

La présente invention a pour objet un système de freinage électromécanique d'un véhicule.

Un système de freinage électromécanique doit être tolérant aux défaillances, c'est-à-dire que, en cas de défaillance d'une partie du système de freinage, celui-ci doit pouvoir fonctionner, au mieux avec un niveau de fonctionnalité équivalent à l'état de fonctionnement normal, et au moins avec un niveau de fonctionnalité permettant d'assurer la sécurité du véhicule.

Pour garantir la tolérance aux défaillances d'un système, différents moyens peuvent être utilisés, notamment l'utilisation de composants redondants et l'isolation des fautes.

Un système de freinage électromécanique comprend des modules électroniques connectés entre eux par un réseau de communication, également appelé bus de communication. Les réseaux de communication se décomposent en deux classes générales de topologie. Les topologies passives (comportant par exemple un bus passif ou un coupleur en étoile passif), et les topologies actives (comportant par exemple un coupleur en étoile actif ou un anneau actif).

Les réseaux de communication à topologie passive présentent l'inconvénient de ne pas permettre l'isolation des fautes et, par suite, de dégrader le niveau de sécurité. Dans ce cas, le niveau de sécurité peut être augmenté au moyen de canaux redondants ou de bus redondants.

Les réseaux de communication à coupleur en étoile actif comportent un ou plusieurs coupleur(s) en étoile actif(s), Des modules électroniques sont généralement connectés à un coupleur en étoile actif par une connexion point à point. Les différentes lignes de communication, également appelées segments de bus, connectées au coupleur en étoile actif sont électriquement indépendantes. Un coupleur en étoile actif permet, lorsqu'une défaillance est détectée, d'isoler la partie du système de freinage, c'est-à-dire la ligne de communication, qui présente la défaillance. Les réseaux de communication actifs présentent l'inconvénient d'être coûteux à réaliser du fait de l'utilisation de composants actifs.

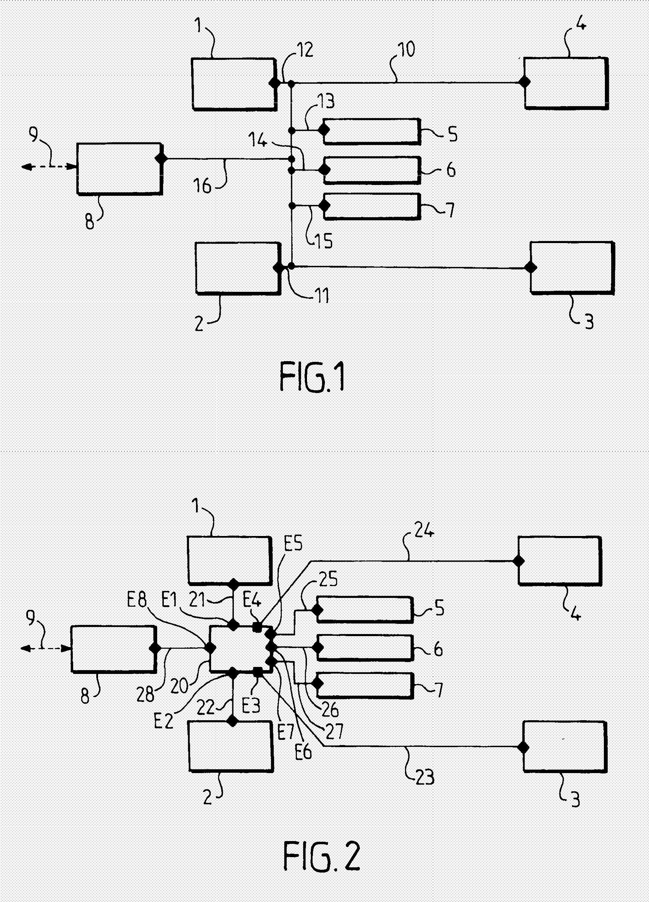

La figure 1 montre un système de freinage électromécanique passif d'un véhicule. Le véhicule comporte quatre roues (non représentées), munies chacune d'un frein électrique (non représenté). Le système de freinage comporte un module électronique de roue avant droit 1 pour commander le frein avant droit, un module électronique de roue avant gauche 2 pour commander le frein avant gauche, un module électronique de roue arrière gauche 3 pour commander le frein arrière gauche et un module électronique de roue arrière droit 4 pour commander le frein arrière droit.

Le système de freinage comporte trois modules électroniques de pédale 5, 6 et 7 associés à la pédale de frein (non représentée) et un module électronique de freinage 8.

Le réseau de communication comporte une ligne principale de communication 10 connectant par exemple le module électronique de roue arrière droit 4 avec le module électronique de roue arrière gauche 3. Le module électronique de roue avant gauche 2 est connecté à la ligne de communication 10 par une ligne de communication 11. Le module électronique de roue avant droit 1 est connecté à la ligne de communication 10 par une ligne de communication 12. Le réseau de communication comporte des lignes de communication 13, 14 et 15 connectant respectivement les modules de pédale 5, 6 et 7 avec la ligne de communication principale 10. Le réseau de communication comporte une ligne de communication 16 connectant le module de freinage 8 avec la ligne de communication principale 10.

Les modules électroniques 1, 2, 3, 4, 5, 6, 7 et 8 sont connectés entre eux de manière passive, c'est-à-dire que les noeuds liant les lignes de communication 10, 11, 12, 13, 14, 15 et 16 ne sont pas séparés par un composant électronique capable d'isoler une partie du réseau de communication. Il n'est donc pas possible d'isoler une défaillance électrique. En cas de défaillance dans le réseau de communication, l'ensemble du réseau ne fonctionne plus.

La figure 2 montre un système de freinage électromécanique actif d'un véhicule. Le véhicule comporte quatre roues (non représentées), munies chacune d'un frein électrique (non représenté). Les éléments du système de freinage électromécanique actif identiques au système de freinage électromécanique passif sont désignés par le même chiffre de référence et ne sont pas décrits à nouveau.

Ici, le système de freinage électromécanique comporte un coupleur actif en étoile 20. Le coupleur 20 comprend, de manière connue en soi, une logique de brassage et un ensemble d'entrées E₁ à E₈, chaque entrée comportant un émetteur-récepteur de ligne, ou interface ou driver de ligne.

Le réseau de communication comporte des lignes de communication 21, 22, 23 et 24 connectant chaque module électronique de roue 1, 2, 3, 4, respectivement, avec une entrée E₁, E₂, E₃ et E₄ du coupleur 20. Le réseau de communication comporte des lignes de communication 25, 26 et 27 connectant chaque module électronique de pédale 5, 6, 7, respectivement, avec une entrée E₅, E₆ et E₇ du coupleur 20. Le réseau de communication comporte une ligne de communication 28 connectant le module électronique de freinage 8 avec l'entrée E₈ du coupleur 20.

Lorsque le coupleur 20 reçoit un signal provenant d'une ligne de communication 21, 22, 23, 24, 25, 26, 27 ou 28, il teste une condition de validité du signal, qui est vérifiée lorsque le signal reçu correspond à un signal de communication normal du système de freinage électromécanique. Lorsque la condition est vérifiée, le coupleur 20 propage le signal reçu sur les autres lignes de communication 21, 22, 23, 24, 25, 26, 27 ou 28. Lorsque la condition n'est pas vérifiée, le coupleur 20 bloque le signal. Les noeuds liant les lignes de communication 21, 22, 23, 24, 25, 26, 27 et 28 sont ainsi électriquement indépendants, séparés par le coupleur 20. Cela permet d'isoler électriquement une ligne de communication en cas de défaillance.

La présente invention a pour but de proposer un système de freinage électromécanique d'un véhicule qui évite au moins certains des inconvénients précités, et qui permette d'atteindre un niveau de sécurité suffisant avec un coût inférieur à un réseau de communication actif.

A cet effet, l'invention a pour objet un système de freinage électromécanique d'un véhicule, comportant quatre modules électroniques de roues, aptes à commander respectivement un frein électrique d'une roue dudit véhicule, et un réseau de communication apte à connecter lesdits modules électroniques de roues, caractérisé en ce que ledit réseau de communication comprend une première ligne de communication connectant un desdits modules électroniques de roue droits avec un desdits modules électroniques de roue gauches, ledit réseau de communication comportant une deuxième ligne de communication connectant l'autre desdits modules électroniques de roue gauches avec l'autre desdits modules électroniques de roue droits, chacune desdites première et deuxième lignes de communication étant connectée avec un coupleur dudit système de freinage apte à isoler électriquement ladite ligne de communication.

Selon un mode de réalisation de l'invention, ladite première ligne de communication connecte ledit module électronique de roue avant droit avec ledit module électronique de roue arrière gauche, ladite deuxième ligne de communication connectant ledit module électronique de roue avant gauche avec ledit module électronique de roue arrière droit.

Avantageusement, le système de freinage électromécanique comporte un unique coupleur, ladite première ligne de communication étant connectée à une première entrée dudit coupleur, ladite deuxième ligne de communication étant connectée à une deuxième entrée dudit coupleur.

Selon un mode de réalisation de l'invention, le système de freinage électromécanique comporte un module électronique de freinage apte à moduler par des fonctions de freinage haut-niveau un freinage de base réalisé sur chacun desdits freins électriques par le biais dudit module électronique de roue correspondant, ledit réseau de communication comportant une troisième ligne de communication connectant ledit module électronique de freinage à une troisième entrée dudit coupleur.

Selon un mode de réalisation de l'invention, le système de freinage électromécanique comprend trois modules électroniques de pédale destinés à mesurer une commande d'un utilisateur sur une pédale de frein dudit véhicule, ledit réseau de communication comportant une ligne de communication connectant un premier module électronique de pédale à une quatrième entrée dudit coupleur, une ligne de communication connectant un deuxième module électronique de pédale à une cinquième entrée dudit coupleur et une ligne de communication connectant un troisième module électronique de pédale à une sixième entrée dudit coupleur.

Selon un mode de réalisation de l'invention, le système de freinage électromécanique comprend trois modules électroniques de pédale destinés à mesurer une commande d'un utilisateur sur une pédale de frein dudit véhicule, ledit réseau de communication comportant une ligne de communication connectant un premier module électronique de pédale à une quatrième entrée dudit coupleur, une ligne de communication connectant un deuxième module électronique de pédale à ladite première ligne de communication et une ligne de communication connectant un troisième module électronique de pédale à ladite deuxième ligne de communication.

Selon un mode de réalisation de l'invention, le système de freinage électromécanique comprend trois modules électroniques de pédale destinés à mesurer une commande d'un utilisateur sur une pédale de frein dudit véhicule, ledit réseau de communication comportant une ligne de communication connectant un premier module électronique de pédale à ladite première ligne de communication, une ligne de communication connectant un deuxième module électronique de pédale à ladite deuxième ligne de communication et une ligne de communication connectant un troisième module électronique de pédale à ladite troisième ligne de communication.

De préférence, ledit coupleur est disposé dans l'habitacle dudit véhicule, ou dans tout autre endroit du véhicule protégé des contraintes environnementales.

Avantageusement, ledit module électronique de freinage réalise une interface entre ledit système de freinage électromécanique et au moins un autre dispositif électronique dudit véhicule.

Selon un mode de réalisation de l'invention, ledit réseau de communication comprend deux canaux redondants, un coupleur étant respectivement associé à chacun desdits canaux.

Selon un mode de réalisation de l'invention, le système de freinage électromécanique comporte un module de freinage et trois modules de pédale, ledit réseau de communication comportant un premier canal et un deuxième canal, ledit premier canal connectant le module électronique de roue avant droit avec le module électronique de roue arrière gauche, ledit deuxième canal connectant le module de roue avant gauche avec le module de roue arrière droit, un premier coupleur étant connecté audit premier canal, un deuxième coupleur étant connecté audit deuxième canal, les trois modules de pédale et le module de freinage étant connectés audit premier coupleur et audit deuxième coupleur.

Selon un mode de réalisation de l'invention, le système de freinage électromécanique comporte un module de freinage et trois modules de pédale, ledit réseau de communication comportant un premier canal et un deuxième canal, ledit premier canal connectant le module électronique de roue avant droit avec le module électronique de roue arrière gauche, ledit deuxième canal connectant le module de roue avant gauche avec le module de roue arrière droit, un premier coupleur étant connecté audit premier canal, un deuxième coupleur étant connecté audit deuxième canal, un premier des trois modules de pédale et le module de freinage étant connectés audit premier coupleur et audit deuxième coupleur, un deuxième des trois modules de pédale étant connecté audit premier canal, un troisième desdits trois modules de pédale étant connecté audit deuxième canal.

Selon un mode de réalisation de l'invention, le système de freinage électromécanique comporte un module de freinage et trois modules de pédale, ledit réseau de communication comportant un premier canal et un deuxième canal, ledit premier canal connectant le module électronique de roue avant droit avec le module électronique de roue arrière gauche, ledit deuxième canal connectant le module de roue avant gauche avec le module de roue arrière droit, un premier coupleur étant connecté audit premier canal, un deuxième coupleur étant connecté audit deuxième canal, un premier desdits trois modules de pédale et le module de freinage étant connectés à une même entrée dudit premier coupleur et à une même entrée dudit deuxième coupleur, un deuxième desdits trois modules de pédale étant connecté audit premier canal, un troisième desdits trois modules de pédale étant connecté audit deuxième canal.

Selon un mode de réalisation de l'invention, le système de freinage électromécanique comporte un gardien de réseau intégré sur au moins un des deux coupleurs.

Selon un mode de réalisation de l'invention, le système de freinage électromécanique comporte un gardien de réseau sur chacun des modules électroniques du système de freinage.

Selon un mode de réalisation de l'invention, le système de freinage électromécanique comporte un gardien de réseau seulement sur les modules électroniques connectés aux deux canaux.

Selon un mode de réalisation de l'invention, ladite première ligne de communication connecte ledit module électronique de roue avant droit avec ledit module électronique de roue avant gauche, ladite deuxième ligne de communication connectant ledit module électronique de roue arrière gauche avec ledit module électronique de roue arrière droit.

Selon un mode de réalisation de l'invention, le système de freinage électromécanique comprend uniquement deux modules électroniques de pédale, ces modules étant silencieux sur défaillance.

L'invention sera mieux comprise, et d'autres buts, détails, caractéristiques et avantages de celle-ci apparaîtront plus clairement au cours de la description explicative détaillée qui va suivre, de plusieurs modes de réalisation de l'invention donnés à titre d'exemples purement illustratifs et non limitatifs, en référence aux dessins schématiques annexés. Sur ces dessins :
- la figure 1 est une vue schématique simplifiée d'un système de freinage électromécanique passif ;
- la figure 2 est une vue schématique simplifiée d'un système de freinage électromécanique actif ;
- la figure 3 est une vue schématique simplifiée d'un système de freinage électromécanique selon un premier mode de réalisation de l'invention ;
- la figure 4 est une vue schématique simplifiée d'un système de freinage électromécanique selon un deuxième mode de réalisation de l'invention ;
- la figure 5 est une vue schématique simplifiée d'un système de freinage électromécanique selon un troisième mode de réalisation de l'invention ;
- la figure 6 est une vue schématique simplifiée d'un système de freinage électromécanique selon un quatrième mode de réalisation de l'invention ;
- la figure 7 est une vue schématique simplifiée d'un coupleur similaire à celui utilisé dans le système de freinage électromécanique de la figure 3 ;
- la figure 8 est une vue schématique simplifiée d'un système de freinage électromécanique selon un cinquième mode de réalisation de l'invention ;
- la figure 9 est une vue schématique simplifiée d'un système de freinage électromécanique selon un sixième mode de réalisation de l'invention ; et
- la figure 10 est une vue schématique simplifiée d'un système de freinage électromécanique selon un septième mode de réalisation de l'invention ;

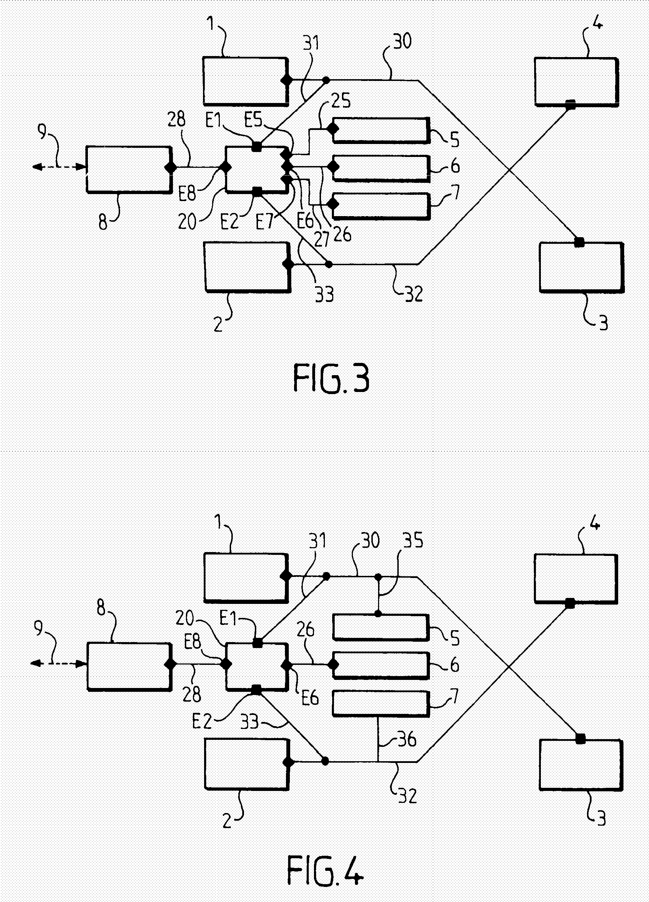

La figure 3 montre un système de freinage électromécanique d'un véhicule selon un premier mode de réalisation de l'invention.
Le véhicule comporte quatre roues (non représentées), munies chacune d'un frein électrique (non représenté). Les éléments du système de freinage électromécanique identiques au système de freinage électromécanique actif sont désignés par le même chiffre de référence et ne sont pas décrits à nouveau.

Chaque module électronique de roue 1, 2, 3 et 4 comporte un microcontrôleur et un ensemble de capteurs permettant de contrôler la force de freinage appliquée au frein électrique respectif. Chaque module de roue 1, 2, 3, 4 réalise localement un freinage de base. Le freinage de base permet de freiner de manière basique le véhicule à partir d'une requête conducteur sur la pédale de frein. La fonction freinage de base est opérationnelle en cas de défaillance, c'est-à-dire qu'en cas de défaillance la fonction doit toujours être présente, soit en mode nominal, soit en mode dégradé. Les quatre modules électroniques de roue 1, 2, 3, 4 composent donc une unité tolérante aux défaillances pour la fonction freinage de base. Chaque module électronique de roue 1, 2, 3 et 4 est alimenté en énergie par un système d'alimentation en énergie (non représenté) tolérant aux défaillances.

Les modules électroniques de pédale 5, 6 et 7 réalisent une interface conducteur et ont pour fonction de mesurer la commande du conducteur à partir de trois capteurs, par exemple un capteur de force et deux capteurs de déplacement, disposés dans un émulateur de toucher de pédale (non représenté). Cette fonction interface conducteur doit également être opérationnelle en cas de défaillance. Les trois modules électroniques de pédale 5, 6, 7 et leurs capteurs respectifs composent une unité tolérante aux défaillances pour la fonction commande conducteur. Chaque module électronique de pédale 5, 6, 7 est alimenté en énergie par le système d'alimentation en énergie tolérant aux défaillances.

Le module électronique de freinage 8 est apte à moduler la fonction freinage de base réalisée par les modules électroniques de roue 1, 2, 3 ou 4, afin d'assurer des fonctions de freinage haut niveau, par exemple l'ABS (Anti-lock Brake System), le TCS (Traction Control System) et/ou le VSE (Vehicle Stability Enhancement). Les fonctions de freinage haut-niveau doivent être silencieuses sur défaillance, c'est-à-dire qu'en cas de défaillance on supprime la fonction. Le module électronique de freinage 8 réalise également une interface entre le système de freinage électromécanique et d'autres systèmes électroniques du véhicule auxquels il est connecté par une ligne de communication 9, par exemple le réseau CAN (controller area network) du véhicule.

Le module électronique de freinage 8 est silencieux sur défaillance. Il comporte une architecture interne redondée (non décrite en détails) de façon à détecter toute défaillance. En cas de défaillance détectée, les fonctions de freinage de haut niveau sont simplement supprimées. En d'autres termes, en cas de défaillance, le module électronique de freinage 8 n'envoie plus de commande de freinage haut-niveau vers les modules électroniques de roue 1, 2, 3, 4. Le module électronique de freinage 8 est alimenté en énergie par le système d'alimentation en énergie.

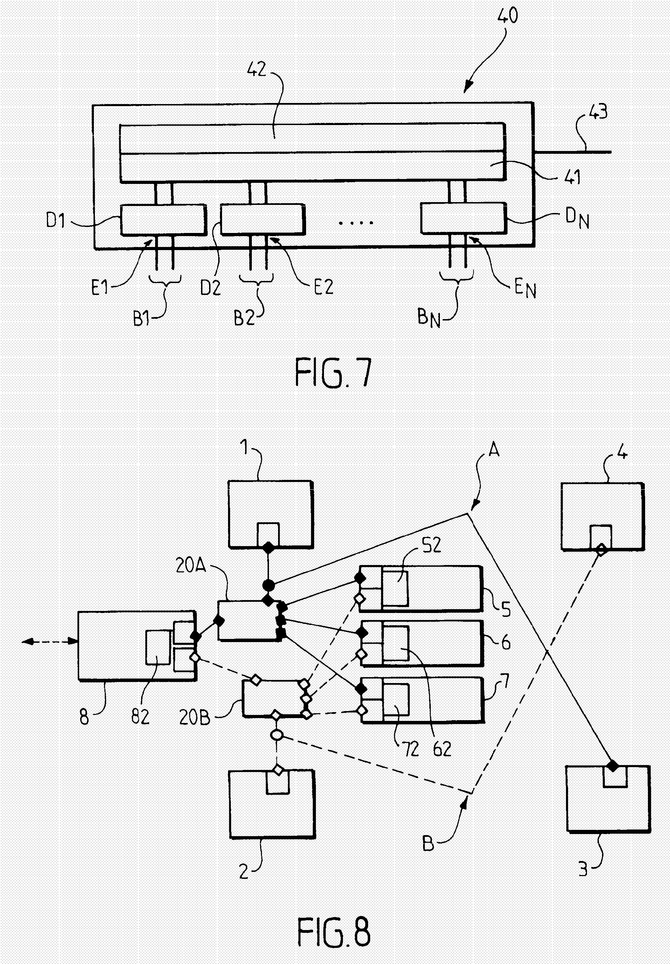

La figure 7 montre un coupleur actif en étoile 40. La fonction du coupleur 40 est d'isoler électriquement des lignes de communication B₁ à B_{N} qui lui sont connectées, respectivement, via des entrées E₁ à E_{N}. Les entrées E₁ à EN comportent des drivers de ligne ou émetteur-récepteur D₁ à D_{N}. Le coupleur 40 comporte un module de commande 41, comprenant une logique de propagation, destiné à gérer la propagation d'un signal sur une ligne B₁ à B_{N} aux autres lignes B₁ à B_{N}. La logique de propagation peut être réalisée par une configuration spécifique des drivers de lignes D₁ à D_{N} ou peut utiliser des composants supplémentaires. Le coupleur actif en étoile 40 est électriquement alimenté par une ligne 43 du système d'alimentation en énergie tolérant aux défaillances.

En mode nominal, lorsque le coupleur 40 détecte un signal, par exemple une trame de communication, sur une ligne B₁ à B_{N}, il commande la propagation de la trame de communication à toutes les autres lignes B₁ à B_{N}. Lorsqu'une défaillance se produit sur une ligne B, par exemple la ligne B₁, le coupleur 40 détecte cette défaillance, par exemple par la comparaison de la trame avec un modèle de trame (par exemple, modèle de tension et/ou modèle temporel), et isole la ligne présentant la défaillance, ici la ligne B₁. La communication reste possible pour les autres lignes B, ici les lignes B₂ à B_{N}.

Ainsi, toute défaillance électrique (par exemple un court-circuit) sur une ligne B₁ à B_{N} est isolée par le coupleur 40 et ne se propage pas aux autres lignes B₁ à B_{N} connectées au coupleur 40. En d'autres termes, en cas de panne, seul la ligne B défaillante est hors service et la communication, c'est-à-dire l'émission et la réception de signaux, restent possibles sur les lignes restantes.

Le coupleur 40 permet ainsi de détecter et d'isoler une défaillance sur la couche physique d'une ligne de communication (par exemple un court-circuit sur un fil). D'autres types de défaillances peuvent se produire, par exemple un module, ou noeud, qui, du fait d'une défaillance interne, transmet une trame de communication en dehors de sa fenêtre temporelle autorisée. Une telle défaillance peut avoir pour conséquence la perte du réseau de communication, car les autres modules ne peuvent plus communiquer sur le réseau pendant leur intervalle temporel lorsque cet intervalle est utilisé par le module défaillant. Pour détecter et isoler ce type de défaillances on utilise un gardien de réseau.

Deux types d'implémentation sont possibles pour le gardien de réseau. Dans une implémentation décentralisée (non représentée), un gardien de réseau est disposé dans chaque module. Le contrôleur de communication du module est dans ce cas « localement » contrôlé par le gardien correspondant. Lorsque le contrôleur est défaillant, le gardien désactive l'accès du module au réseau de communication.

Dans une implémentation centralisée (représentée sur la figure 7) un gardien de réseau 42 est disposé dans le coupleur 40. Le gardien 42 contrôle dans cette implémentation tous les modules connectés au coupleur 40. Lorsque le gardien 42 détecte une défaillance, il isole la ligne B₁ à B_{N} défaillante, une communication restant possible entre toutes les autres lignes B₁ à B_{N}.

On notera que, dans un réseau à topologie passive, seule une implémentation décentralisée du gardien de réseau peut être mise en oeuvre. Dans un réseau de communication à topologie active l'implémentation du gardien de réseau peut être centralisée ou décentralisée.

Le système de freinage électromécanique représenté sur la figure 3 comporte par exemple un coupleur 20, identique au coupleur 40, intégrant potentiellement un gardien de réseau.

Le réseau de communication comporte une ligne de communication 30 connectant le module électronique de roue avant droit 1 avec le module électronique de roue arrière gauche 3, une ligne de communication 31 connectant la ligne de communication 30 avec une entrée E₁ du coupleur 20, une ligne de communication 32 connectant le module électronique de roue avant gauche 2 avec le module électronique de roue arrière droit 4 et une ligne de communication 33 connectant la ligne de communication 32 avec une entrée E₂ du coupleur 20. En d'autres termes, les modules électroniques de roue 1, 2, 3 et 4 sont connectés selon une topologie diagonale, la première diagonale comprenant les modules électroniques de roue avant droit 1 et arrière gauche 3, et la seconde diagonale comprenant les modules électroniques de roue avant gauche 2 et arrière droite 4.

Le réseau de communication comporte des lignes de communication 25, 26 et 27 connectant les module électroniques de pédale 5, 6 et 7, respectivement, avec les entrées E₅, E₆ et E₇ du coupleur 20 et une ligne de communication 28 connectant le module électronique de freinage 8 avec une entrée E₈ du coupleur 20.

On va maintenant décrire le fonctionnement du système de freinage électromécanique selon le premier mode de réalisation de l'invention.

Lorsque le coupleur 20 reçoit un signal, par exemple une trame de communication, provenant d'une ligne de communication, par exemple la ligne 25, il teste la condition de validité du signal. En fonctionnement normal, c'est-à-dire en l'absence de défaillance dans le réseau de communication, la condition de validité du signal est vérifiée et le coupleur 20 propage le signal reçu sur les autres lignes de communication 26, 27, 28, 30, 31, 32 et 33.

En cas de défaillance dans le réseau de communication, lorsqu'un module électronique connecté à la ligne de communication présentant la défaillance, par exemple le module électronique de pédale 5 de la ligne 25, émet un signal à destination du coupleur 20, la condition de validité du signal n'est pas vérifiée et le coupleur 20 bloque le signal. En d'autres termes, le coupleur 20 isole la ligne de communication présentant la défaillance, ici la ligne 25. Les autres lignes de communication communiquent comme précédemment.

Ainsi, en cas de défaillance sur une diagonale (par exemple un court-circuit), la diagonale est perdue, mais le système est capable de freiner avec l'autre diagonale puisque le coupleur 20 isole la défaillance. Par exemple, en cas de défaillance sur la ligne de communication 32, les signaux reçus par le coupleur 20 par le biais de la ligne de communication 33 ne vérifient pas la condition de validité et ne sont pas transmis. Les modules électroniques de roue 2 et 4 ne fonctionnent donc plus, car ils ne peuvent plus communiquer avec les autres modules, en particulier avec les modules électroniques de pédale 5, 6, 7. Dans ce cas, la communication entre le module électronique de freinage 8, les modules électroniques de pédale 5, 6 et 7 et les modules électroniques de roue 1 et 3 est maintenue. En particulier, la communication entre les modules électroniques de pédales 5, 6, 7 et les modules électroniques de roue 1 et 3 permet de réaliser un freinage de base sur la diagonale comprenant la roue avant droite et la roue arrière gauche. Les deux diagonales sont ainsi électriquement isolées, de la même manière que les deux diagonales d'un système de freinage hydraulique conventionnel. On considère que le coupleur 20 ne peut pas être un point de défaillance, parce que ce composant est simple, peut comporter une redondance interne et peut être disposé dans le véhicule dans une zone sûre, de manière à atteindre un niveau de fiabilité élevé. Le coupleur 20 est par exemple disposé dans l'habitacle du véhicule ou dans tout autre endroit du véhicule protégé des contraintes environnementales (vibrations, température, humidité).

Pour atteindre un niveau de sécurité suffisant pour le véhicule, c'est-à-dire pour permettre au véhicule de s'arrêter sans problème de sécurité, un système de freinage doit être apte à commander le freinage sur au moins une roue droite et une roue gauche du véhicule, par exemple deux roues d'une même diagonale, deux roues avant ou deux roues arrière. Dans un système de freinage actif (figure 2), l'isolation des défaillances excède le niveau de sécurité défini précédemment.

Le système de freinage selon le premier mode de réalisation permet d'économiser deux points de connexion, c'est-à-dire deux entrées E, sur le coupleur 20 par rapport à un réseau de communication actif. Cela permet de diminuer le nombre de composants du coupleur 20, notamment le nombre d'émetteurs-récepteurs de ligne, ou interfaces de ligne, et de simplifier la partie logique du coupleur 20.

La figure 4 montre un deuxième mode de réalisation du système de freinage électromécanique. Les éléments du système de freinage électromécanique identiques au premier mode de réalisation sont désignés par le même chiffre de référence et ne sont pas décrits à nouveau. Ici, le réseau de communication comporte une ligne de communication 35 connectant le module électronique de pédale 5 avec la ligne de communication 30, et une ligne de communication 36 connectant le module électronique de pédale 7 avec la ligne de communication 32.

Le fonctionnement du système de freinage électromécanique selon le deuxième mode de réalisation est similaire au fonctionnement du système de freinage électromécanique selon le premier mode de réalisation. Ici, en cas de défaillance sur une diagonale, un module électronique de pédale 5 (respectivement 7), ne fonctionne plus. Les deux modules électroniques de pédale restants 6 et 7 (respectivement 5 et 6) sont dans ce cas utilisés pour mesurer une commande du conducteur.

Ce mode de réalisation permet d'économiser quatre points de connexion par rapport à un réseau de communication actif.

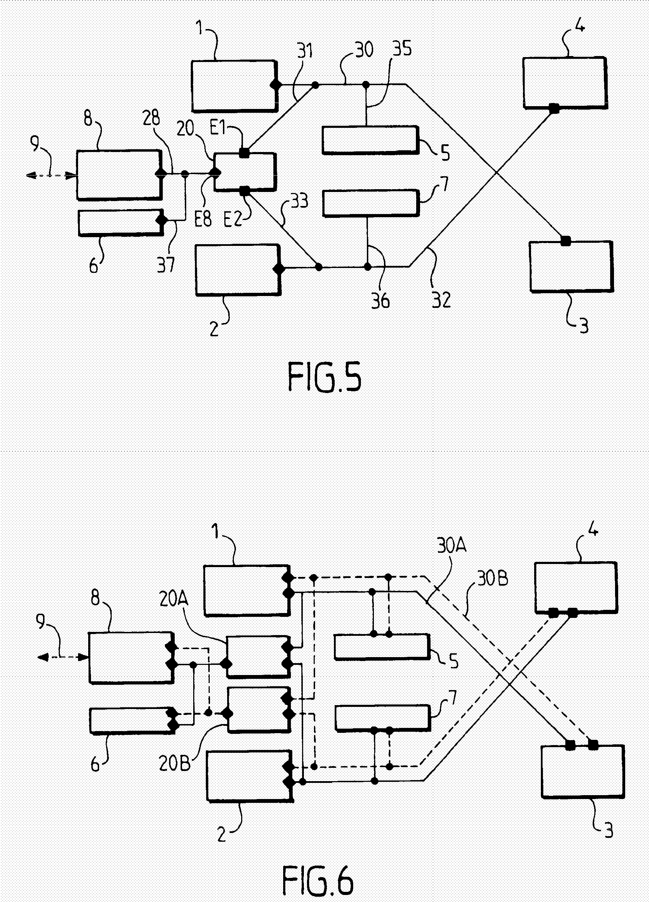

La figure 5 montre un troisième mode de réalisation du système de freinage électromécanique. Les éléments du système de freinage électromécanique identiques au deuxième mode de réalisation sont désignés par le même chiffre de référence et ne sont pas décrits à nouveau. Ici, le réseau de communication comporte une ligne de communication 37 connectant le module électronique de pédale 6 avec la ligne de communication 28.

Le fonctionnement du système de freinage électromécanique selon le troisième mode de réalisation est similaire au fonctionnement du système de freinage électromécanique selon le deuxième mode de réalisation. Ici, en cas de défaillance sur la ligne de communication 28, le module électronique de pédale 6 ne fonctionne plus. Les deux modules électroniques de pédale restants 5 et 7 sont dans ce cas utilisés pour mesurer la commande du conducteur.

Ce mode de réalisation permet d'économiser cinq points de connexion par rapport à un réseau de communication actif.

Les trois modes de réalisation décrits précédemment fournissent un compromis entre un réseau de communication passif, peu coûteux, et un réseau de communication actif, permettant l'isolation des fautes. Les trois modes de réalisation utilisent la redondance inhérente du système de freinage, c'est-à-dire la présence des quatre modules électroniques de roues associés aux quatre roues, en vue de fournir une isolation des défaillances uniquement dans des parties spécifiques du système de freinage, en fonction des exigences de sécurité définies dans le système de freinage. En d'autres termes, le réseau de communication comporte des portions passives lorsqu'une isolation des défaillances n'est pas nécessaire, les portions passives étant connectées entre elles de manière active pour assurer la sécurité du système en cas de défaillance dans une des portions passives. Cela permet d'atteindre le niveau de sécurité souhaité avec un coût inférieur à un réseau de communication actif.

Dans une variante non représentée, les lignes de communication 30 et 32 peuvent être remplacées par une ligne de communication connectant le module électronique de roue avant droit 1 avec le module électronique de roue avant gauche 2 et une ligne de communication connectant le module électronique de roue arrière gauche 3 avec le module électronique de roue arrière droit 4.

La figure 6 montre un quatrième mode de réalisation du système de freinage électromécanique. Ici, le réseau de communication comporte deux canaux redondants, c'est-à-dire que chaque ligne de communication est doublée, tel que cela est symbolisé par des indices A et B sur la figure 6. Par exemple, la ligne de communication 30 (figure 5), connectant le module électronique de roue 1 et le module électronique de roue 3, est remplacée par deux lignes de communication 30_{A} et 30_{B}, connectant chacune le module électronique de roue 1 avec le module électronique de roue 3. Chaque canal correspond ainsi au réseau de communication selon le troisième mode de réalisation décrit précédemment. Le système de freinage comporte deux coupleurs 20_{A} et 20_{B}, chaque coupleur 20_{A}, 20_{B} étant similaire au coupleur 20. Dans ce cas, les deux coupleurs 20_{A} et 20_{B} sont de préférence séparés l'un de l'autre. Par exemple, le coupleur 20_{A} est intégré dans un module électronique de freinage 8 et le coupleur 20_{B} intégré dans le module électronique de pédale 6.

On notera que, dans le cas d'un réseau de communication à deux canaux, les économies de composants sont multipliées par deux par rapport au réseau de communication à canal unique.

Il est bien évident qu'une redondance similaire peut être appliquée aux premier et deuxième modes de réalisation.

En variante, les quatre modes de réalisation décrits précédemment peuvent être réalisés avec un gardien de réseau décentralisé.

Les figures 8 à 10 montrent, respectivement, un cinquième mode de réalisation, un sixième mode de réalisation et un septième mode de réalisation, dans lesquels le réseau de communication, ou bus de communication, comporte deux canaux A et B. Sur les figures 8 à 10, les lignes de communication du canal A sont représentées en trait plein et les lignes de communication du canal B sont représentées en traits interrompus.

Un coupleur 20_{A} est connecté au canal A. Un coupleur 20_{B} est connecté au canal B. Ces trois modes de réalisation permettent de combiner une isolation des fautes réalisée par les coupleurs 20_{A}, 20_{B} et une isolation des fautes réalisée directement par une redondance des canaux A et B. Le canal A connecte la roue avant droite avec la roue arrière gauche et le canal B connecte la roue avant gauche avec la roue arrière droite. En d'autres termes, chaque canal A, B est affecté à une diagonale.

Cette séparation des canaux A et B permet d'obtenir une réduction du coût d'un système de freinage comportant deux coupleurs actifs car elle permet de réduire le nombre de fils, de drivers de ligne, et la taille du contrôleur de communication.

Dans le cinquième mode de réalisation (figure 8), les trois modules de pédale 5, 6, 7 et le module de freinage 8 sont connectés aux deux canaux A et B, c'est-à-dire que les trois modules de pédale 5, 6, 7 et le module de freinage 8 sont connectés d'une part au coupleur 20_{A} et d'autre part au coupleur 20_{B}.

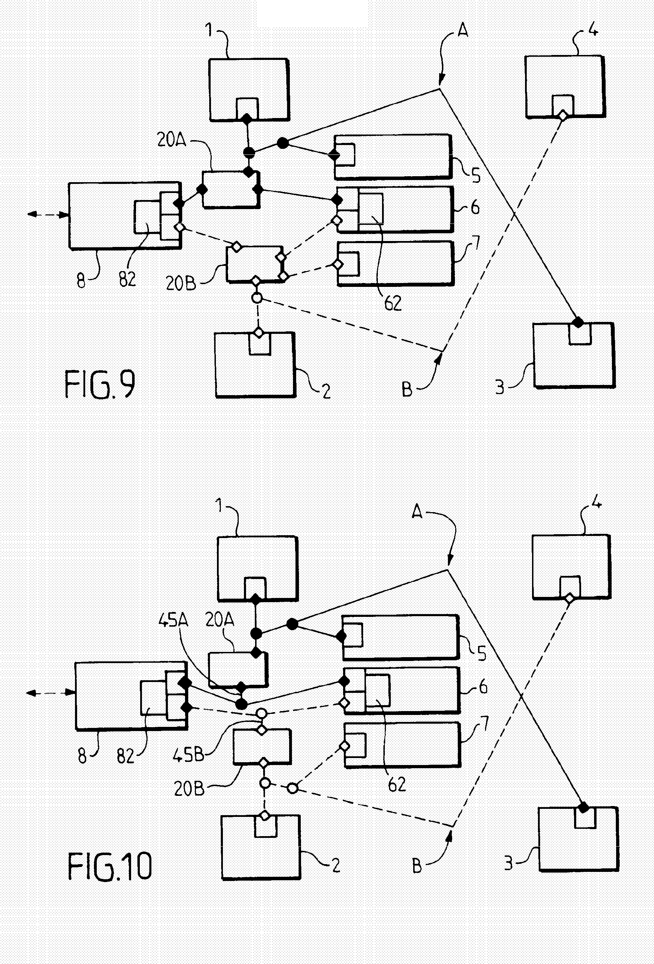

Dans le sixième mode de réalisation (figure 9), seul le module de pédale 6 et le module de freinage 8 sont connectés aux deux canaux A et B. Le module de pédale 5 est connecté au canal A et le module de pédale 7 est connecté au canal B.

Dans le septième mode de réalisation (figure 10), le module de pédale 6 et le module de freinage 8 sont connectés au canal A par une même ligne de communication 45_{A} et au canal B par une même ligne de communication 45_{B}.

En cas de défaillance (perte d'un coupleur 20_{A}, 20_{B} ou perte d'un module 1, 2, 3, 4, 5, 6, 7, 8), il est nécessaire, pour des raisons de sécurité, que le système de freinage dispose toujours d'au moins un module de roue gauche 2, 3 et d'un module de roue droit 1, 4, par exemple de deux modules de roue d'une diagonale, et de deux modules de pédales 5, 6, 7, communiquant ensemble pour permettre un arrêt du véhicule. Ces règles de sécurité sont respectées par les cinquième, sixième et septième modes de réalisation décrits précédemment.

Ces trois modes de réalisation peuvent être réalisés avec un gardien de réseau décentralisé ou avec un gardien de réseau centralisé.

Ces trois modes de réalisation permettent une implémentation économique d'un gardien de réseau décentralisé. En effet, dans une approche décentralisée classique, un gardien est disposé sur chaque module, repérés sur les figures 8 à 10 respectivement 52, 62, 72 et 82 pour chacun des modules 5, 6, 7 et 8. Les trois modes de réalisation peuvent être réalisés avec un gardien sur chaque module ou avec un gardien seulement sur les modules qui sont connectés aux deux canaux A et B. Dans ce cas, les modules de roue 1, 2, 3, 4, qui sont connectées à un seul canal A ou B, n'ont pas besoin d'un gardien. Cela permet de réduire les coûts. En cas de défaillance d'un module, un canal entier est perdu. Cependant, l'autre canal permet dans ce cas d'assurer le freinage.

Bien que l'invention ait été décrite en relation avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Système de freinage électromécanique d'un véhicule, comportant quatre modules électroniques de roues (1, 2, 3, 4), aptes à commander respectivement un frein électrique d'une roue dudit véhicule, et un réseau de communication apte à connecter lesdits modules électroniques de roues, **caractérisé en ce que** ledit réseau de communication comprend une première ligne de communication (30) connectant un desdits modules électroniques de roue droits (1, 4) avec un desdits modules électroniques de roue gauches (2, 3), ledit réseau de communication comportant une deuxième ligne de communication (32) connectant l'autre desdits modules électroniques de roue gauches (2, 3) avec l'autre desdits modules électroniques de roue droits (1, 4), chacune desdites première et deuxième lignes de communication étant connectée avec un coupleur (20, 20A, 20B) dudit système de freinage apte à isoler électriquement ladite ligne de communication.

2. Système de freinage électromécanique selon la revendication 1, **caractérisé en ce que** ladite première ligne de communication (30) connecte ledit module électronique de roue avant droit (1) avec ledit module électronique de roue arrière gauche (3), ladite deuxième ligne de communication (32) connectant ledit module électronique de roue avant gauche (2) avec ledit module électronique de roue arrière droit (4).

3. Système de freinage électromécanique selon la revendication 1 ou 2, **caractérisé en ce qu'**il comporte un unique coupleur (20), ladite première ligne de communication étant connectée à une première entrée (E1) dudit coupleur (20), ladite deuxième ligne de communication étant connectée à une deuxième entrée (E2) dudit coupleur (20).

4. Système de freinage électromécanique selon la revendication 3, **caractérisé en ce qu'**il comporte un module électronique de freinage (8) apte à moduler par des fonctions de freinage haut-niveau un freinage de base réalisé sur chacun desdits freins électriques par le biais dudit module électronique de roue (1, 2, 3, 4) correspondant, ledit réseau de communication comportant une troisième ligne de communication (28) connectant ledit module électronique de freinage à une troisième entrée (E₈) dudit coupleur (20).

5. Système de freinage électromécanique selon la revendication 3 ou 4, **caractérisé en ce qu'**il comprend trois modules électroniques de pédale (5, 6, 7) destinés à mesurer une commande d'un utilisateur sur une pédale de frein dudit véhicule, ledit réseau de communication comportant une ligne de communication (25) connectant un premier module électronique de pédale (5) à une quatrième entrée (E₅) dudit coupleur (20), une ligne de communication (26) connectant un deuxième module électronique de pédale (6) à une cinquième entrée (E₆) dudit coupleur et une ligne de communication (27) connectant un troisième module électronique de pédale (7) à une sixième entrée (E₇) dudit coupleur.

6. Système de freinage électromécanique selon la revendication 3 ou 4, **caractérisé en ce qu'**il comprend trois modules électroniques de pédale (5, 6, 7) destinés à mesurer une commande d'un utilisateur sur une pédale de frein dudit véhicule, ledit réseau de communication comportant une ligne de communication (26) connectant un premier module électronique de pédale (6) à une quatrième entrée (E₆) dudit coupleur (20), une ligne de communication (35) connectant un deuxième module électronique de pédale (5) à ladite première ligne de communication (30) et une ligne de communication (36) connectant un troisième module électronique de pédale (7) à ladite deuxième ligne de communication (32).

7. Système de freinage électromécanique selon la revendication 4, **caractérisé en ce qu'**il comprend trois modules électroniques de pédale (5, 6, 7) destinés à mesurer une commande d'un utilisateur sur une pédale de frein dudit véhicule, ledit réseau de communication comportant une ligne de communication (35) connectant un premier module électronique de pédale (5) à ladite première ligne de communication (30), une ligne de communication (36) connectant un deuxième module électronique de pédale (7) à ladite deuxième ligne de communication (32) et une ligne de communication (37) connectant un troisième module électronique de pédale (6) à ladite troisième ligne de communication (28).

8. Système de freinage électromécanique selon l'une quelconque des revendications 3 à 7, **caractérisé en ce que** ledit coupleur (20) est disposé dans l'habitacle dudit véhicule, ou dans tout autre endroit du véhicule protégé des contraintes environnementales.

9. Système de freinage électromécanique selon la revendication 4 prise seule ou en combinaison avec l'une quelconque des revendications 5 à 8, **caractérisé en ce que** ledit module électronique de freinage (8) réalise une interface entre ledit système de freinage électromécanique et au moins un autre dispositif électronique dudit véhicule.

10. Système de freinage électromécanique selon la revendication 1 , **caractérisé en ce que** ledit réseau de communication comprend deux canaux redondants, un coupleur (20_{A}, 20_{B}) étant respectivement associé à chacun desdits canaux.

11. Système de freinage électromécanique selon la revendication 1, **caractérisé en ce qu'**il comporte un module de freinage (8) et trois modules de pédale (5, 6, 7), ledit réseau de communication comportant un premier canal (A) et un deuxième canal (B), ledit premier canal (A) connectant le module électronique de roue avant droit (1) avec le module électronique de roue arrière gauche (3), ledit deuxième canal (B) connectant le module de roue avant gauche (2) avec le module de roue arrière droit (4), un premier coupleur (20_{A}) étant connecté audit premier canal (A), un deuxième coupleur (20_{B}) étant connecté audit deuxième canal (B), les trois modules de pédale (5, 6, 7) et le module de freinage (8) étant connectés audit premier coupleur (20_{A}) et audit deuxième coupleur (20_{B}).

12. Système de freinage électromécanique selon la revendication 1, **caractérisé en ce qu'**il comporte un module de freinage (8) et trois modules de pédale (5, 6, 7), ledit réseau de communication comportant un premier canal (A) et un deuxième canal (B), ledit premier canal (A) connectant le module électronique de roue avant droit (1) avec le module électronique de roue arrière gauche (3), ledit deuxième canal (B) connectant le module de roue avant gauche (2) avec le module de roue arrière droit (4), un premier coupleur (20_{A}) étant connecté audit premier canal (A), un deuxième coupleur (20_{B}) étant connecté audit deuxième canal (B), un premier (6) des trois modules de pédale et le module de freinage (8) étant connectés audit premier coupleur (20_{A}) et audit deuxième coupleur (20_{B}), un deuxième (5) des trois modules de pédale étant connecté audit premier canal (A), un troisième (7) desdits trois modules de pédale étant connecté audit deuxième canal (B).

13. Système de freinage électromécanique selon la revendication 1, **caractérisé en ce qu'**il comporte un module de freinage (8) et trois modules de pédale (5, 6, 7), ledit réseau de communication comportant un premier canal (A) et un deuxième canal (B), ledit premier canal (A) connectant le module électronique de roue avant droit (1) avec le module électronique de roue arrière gauche (3), ledit deuxième canal (B) connectant le module de roue avant gauche (2) avec le module de roue arrière droit (4), un premier coupleur (20_{A}) étant connecté audit premier canal (A), un deuxième coupleur (20_{B}) étant connecté audit deuxième canal (B), un premier (6) desdits trois modules de pédale et le module de freinage (8) étant connectés à une même entrée dudit premier coupleur (20_{A}) et à une même entrée dudit deuxième coupleur (20_{B}), un deuxième (5) desdits trois modules de pédale étant connecté audit premier canal (A), un troisième (7) desdits trois modules de pédale étant connecté audit deuxième canal (B).

14. Système de freinage électromécanique selon l'une quelconque des revendications 11 à 13, **caractérisée en ce qu'**il comporte un gardien de réseau intégré sur au moins un des deux coupleurs (20A, 20B).

15. Système de freinage électromécanique selon l'une quelconque des revendications 11 à 13, **caractérisé en ce qu'**il comporte un gardien de réseau sur chacun des modules électroniques (1, 2, 3, 4, 5, 6, 7, 8) du système de freinage.

16. Système de freinage électromécanique selon l'une quelconque des revendications 11 à 13, **caractérisé en ce qu'**il comporte un gardien de réseau (52, 62, 72, 82) seulement sur les modules électroniques connectés auxdits deux canaux (A, B).

17. Système de freinage électromécanique selon la revendication 1, **caractérisé en ce que** ladite première ligne de communication connecte ledit module électronique de roue avant droit (1) avec ledit module électronique de roue avant gauche (2), ladite deuxième ligne de communication connectant ledit module électronique de roue arrière gauche (3) avec ledit module électronique de roue arrière droit (4).

18. Système de freinage électromécanique selon la revendication 1, **caractérisé en ce qu'**il comprend uniquement deux modules électroniques de pédale (5, 6), ces modules étant silencieux sur défaillance.
